# EUROPÄISCHE PATENTANMELDUNG

(11) **EP 1 577 734 A2**
(43) Veröffentlichungstag der Anmeldung: **21.09.2005**
(21) Anmeldenummer: 05003235.8
(22) Anmeldetag: 16.02.2005
(51) Int. Cl.: G06F 1/00, G06F 12/14

(54) **Verfahren zum sicheren Betrieb eines tragbaren Datenträgers**

(30) Priorität: 19.02.2004 DE 102004008180
(71) Anmelder: Giesecke & Devrient GmbH, 81677 München (DE)
(72) Erfinder: Baldischweiler, Michael, 81825 München (DE); Bockes, Markus, Dr., 81927 München (DE); Drexler, Hermann, Dr., 81371 München (DE); Kahl, Helmut, Dr., 80992 München (DE); Karch, Torsten, 88085 Langenargen (DE); Lamla, Michael, 80638 München (DE); Mamuzic, Nikola, 81829 München (DE); Seysen, Martin, Dr., 80809 München (DE); Vater, Harald, Dr., 35398 Giessen (DE); Weicker, Sabine, 80469 München (DE)

(57) **Zusammenfassung**

Die Erfindung betrifft ein Verfahren zum sicheren Betrieb eines tragbaren Datenträgers (1), der einen Speicher (4) aufweist. Das erfindungsgemäße Verfahren zeichnet sich dadurch aus, dass bei einer vom tragbaren Datenträger (1) ausgeführten Operation, bei der gemäß vorgegebenen Parametern auf den Speicher (4) des tragbaren Datenträgers (1) zugegriffen wird oder Daten über einen Ausgabekanal (3) des tragbaren Datenträgers (1) ausgegeben werden, wenigstens für einen der vorgegebenen Parameter geprüft wird, ob eine Änderung gegenüber einem vorherigen Wert des Parameters aufgetreten ist.

## Beschreibung

Die Erfindung betrifft ein Verfahren zum sicheren Betrieb eines tragbaren Datenträgers. Weiterhin betrifft die Erfindung einen tragbaren Datenträger.

Bei vielen Einsatzgebieten von tragbaren Datenträgern, wie beispielsweise im Bereich des Zahlungsverkehrs oder bei Zugangskontrollen usw., ist es von vitaler Bedeutung für das jeweilige System, dass der Zustand des tragbaren Datenträgers nicht manipuliert werden kann und im tragbaren Datenträger vorhandene geheime Daten nicht ausgespäht werden können. Besonders kritische Änderungen des Zustands des tragbaren Datenträgers sind beispielsweise eine Änderung der Zugriffsrechte von Dateien im Speicher des tragbaren Datenträgers oder eine Änderung des Ergebnisses, das der tragbare Datenträger bei der Prüfung eines eingegebenen Wertes für eine persönliche Geheimzahl ermittelt hat. Als geheime Daten können im tragbaren Datenträger beispielsweise ein geheimer Schlüssel, eine persönliche Geheimzahl, ein persönlicher Geheimcode zum Zurücksetzen des tragbaren Datenträgers nach dessen Sperrung usw. abgelegt sein. Potentielle Angriffe können auf das Timing des tragbaren Datenträgers abzielen oder versuchen, den tragbaren Datenträger zum Beispiel durch Lichteinwirkung oder eine kurzzeitige Erhöhung oder Absenkung der Betriebsspannung oder andere physikalische Einflüsse zu beeinflussen. Da nicht verhindert werden kann, dass ein tragbarer Datenträger in den physischen Einflussbereich eines Angreifers gelangt, ist es wichtig, den tragbaren Datenträger möglichst angriffssicher auszubilden.

Es ist daher Aufgabe der Erfindung, den Betrieb eines tragbaren Datenträgers möglichst sicher zu gestalten.

Diese Aufgabe wird durch ein Verfahren mit der Merkmalskombination des Anspruchs 1 gelöst.

Das erfindungsgemäße Verfahren betrifft den sicheren Betrieb eines tragbaren Datenträgers, der einen Speicher aufweist. Die Besonderheit des erfindungsgemäßen Verfahrens besteht darin, dass bei einer vom tragbaren Datenträger ausgeführten Operation, bei der gemäß vorgegebenen Parametern auf den Speicher des tragbaren Datenträgers zugegriffen wird oder Daten über einen Ausgabekanal des tragbaren Datenträgers ausgegeben werden, wenigstens für einen der vorgegebenen Parameter geprüft wird, ob eine Änderung gegenüber einem vorherigen Wert des Parameters aufgetreten ist.

Die Erfindung hat den Vorteil, dass Änderungen der Parameter, die beispielsweise durch eine Manipulation des tragbaren Datenträgers hervorgerufen werden, erkannt werden, so dass geeignete Gegenmaßnahmen eingeleitet werden können. Dadurch kann beispielsweise verhindert werden, dass geheime Daten in von außen zugängliche Speicherbereiche kopiert werden oder über den Ausgabekanal ausgegeben werden. Somit wird ein Ausspähen geheimer Daten des tragbaren Datenträgers erheblich erschwert.

Die Prüfung kann während und/ oder nach Ausführung der Operation erfolgen. Eine Prüfung während der Ausführung der Operation hat den Vorteil, dass bei Ermittlung einer Änderung die Operation abgebrochen werden kann und somit ein Ausspähen wenigstens der Daten, die bis zu diesem Zeitpunkt noch nicht bearbeitet wurden, zuverlässig verhindert werden kann. Eine Prüfung nach der Ausführung der Operation ist insofern vorteilhaft, als in der Operation nicht eigens ein Prüfmechanismus vorgesehen sein muss, sondern dieser getrennt von der Operation implementiert sein kann.

In einem bevorzugten Ausführungsbeispiel des erfindungsgemäßen Verfahrens wird ein Prüfwert im tragbaren Datenträger abgespeichert, mit dessen Hilfe für wenigstens einen Parameter ermittelt werden kann, ob eine Änderung aufgetreten ist. Insbesondere kann der Prüfwert eine aus wenigstens einem Parameter ermittelte Prüfsumme darstellen. Mit einer Prüfsumme lässt sich eine Änderung sehr leicht detektieren. Außerdem besteht die Möglichkeit, eine Prüfsumme über mehrere Parameter zu bilden, so dass mit einer einzigen Prüfsumme mehrere Parameter auf eine Änderung geprüft werden können. Der Prüfwert kann beim Aufruf der Operation zusammen mit den vorgegebenen Parametern übergeben werden, so dass kaum ein zusätzlicher Aufwand für die Mitteilung des Prüfwerts an die Operation entsteht. Typischerweise geben die vorgegebenen Parameter das Ziel und/ oder die Quelle und/oder den Umfang der mit der Operation verarbeiteten Daten an.

Bei der Operation kann es sich beispielsweise um eine Kopierroutine handeln. Ebenso kommt insbesondere eine Ausgaberoutine in Betracht, von der ausschließlich Daten aus einem vorgegebenen Teilbereich des Speichers ausgegeben werden. Durch die Einschränkung auf diesen Teilbereich lässt sich das Risiko einer ungewollten Ausgabe von Daten erheblich reduzieren. Eine nochmalige Reduzierung des Risikos kann dadurch erreicht werden, dass der vorgegebene Teilbereich des Speichers wenigstens temporär ausschließlich für Daten reserviert ist, die für Ausgabe vorgesehen sind. Weiterhin besteht die Möglichkeit, bei der Ausgabe von Daten jeweils zu prüfen, ob diese tatsächlich aus dem vorgegebenen Teilbereich des Speichers stammen.

Um generell das Risiko des Ausspähens geheimer Daten zu reduzieren, ist es vorteilhaft, wenn alle geheimen Daten nach deren Gebrauch in einem Arbeitsspeicher des tragbaren Datenträgers, welcher der temporären Zwischenspeicherung von Daten dient, gelöscht werden.

Der erfindungsgemäße tragbare Datenträger weist einen Speicher auf und zeichnet sich dadurch aus, dass eine Sicherheitsfunktion vorgesehen ist, mit der Änderungen bei Parametern ermittelt werden, gemäß denen auf den Speicher des tragbaren Datenträgers zugegriffen wird oder Daten über einen Ausgabekanal des tragbaren Datenträgers ausgegeben werden.

Der tragbare Datenträger kann insbesondere einen Permanentspeicher aufweisen, dessen unbenutzte Bereiche mit Befehlen aufgefüllt sind, bei deren Ausführung keine Aktionen durchgeführt werden. Am Ende der unbenutzten Bereiche kann jeweils ein Sprungbefehl gespeichert sein. Dabei kann die Sprungadresse des Sprungbefehls innerhalb des jeweiligen unbenutzten Bereichs liegen. Ebenso ist es auch möglich, dass die Sprungadresse des Sprungbefehls auf eine Routine weist, die zu schützende Daten aus dem Speicher löscht. Nach dem Löschen kann die Routine in einer Endlosschleife verharren. Durch diese Maßnahmen können schädliche Auswirkungen von undefinierten Sprüngen im Permanentspeicher verhindert werden, die beispielsweise durch äußere Störungen ausgelöst werden können.

Die Erfindung wird nachstehend anhand der in der Zeichnung dargestellten Ausführungsbeispiele erläutert.

Es zeigen:
- Fig. 1: ein stark vereinfachtes Blockschaltbild für ein Ausführungsbeispiel eines tragbaren Datenträgers und
- Fig. 2: ein Flussdiagramm für eine Variante eines erfindungsgemäßen Ablaufs eines Kopiervorgangs.

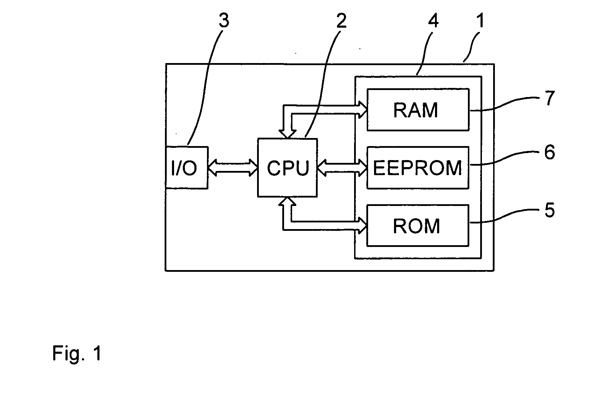

Fig. 1 zeigt ein stark vereinfachtes Blockschaltbild für ein Ausführungsbeispiel eines tragbaren Datenträgers 1, bei dem das erfindungsgemäße Verfahren angewendet werden kann. Bei dem tragbaren Datenträger 1 kann es sich beispielsweise um eine Chipkarte handeln. Der tragbare Datenträger 1 weist eine Steuereinheit 2 auf, die die Funktionsabläufe des tragbaren Datenträgers 1 steuert. Weiterhin weist der tragbare Datenträger 1 eine Ein-/ Ausgabeeinheit 3 und einen Speicher 4 auf. Beim dargestellten Ausführungsbeispiel besteht der Speicher 4 aus einem Permanentspeicher 5, einem nichtflüchtigen Speicher 6 und einem flüchtigen Speicher 7. Alternativ dazu ist auch ein anderer Aufbau des Speichers 4 möglich. Die Steuereinheit 2 ist mit der Ein-/ Ausgabeeinheit 3, dem Permanentspeicher 5, dem nichtflüchtigen Speicher 6 und dem flüchtigen Speicher 7 verbunden. Die Ein-/ Ausgabeeinheit 3 dient der Kommunikation mit externen Geräten, die durch eine berührende Kontaktierung des tragbaren Datenträgers 1 und/ oder kontaktlos abgewickelt werden kann.

Im Permanentspeicher 5 sind Daten abgelegt, die während der gesamten Lebensdauer des tragbaren Datenträgers 1 unverändert erhalten bleiben. Dabei wird der Begriff Daten im Folgenden sehr allgemein im Sinne beliebiger Informationen unabhängig von deren Inhalt verwendet und es werden darunter beispielsweise Programme, Parameter, personenbezogene Angaben, Schlüssel usw. subsumiert. Insbesondere ist im Permanentspeicher 5 das Betriebssystem des tragbaren Datenträgers 1 gespeichert. Dabei sind sämtliche unbenutzten Bereiche des Permanentspeichers 5 mit Kommandos aufgefüllt, die keine Aktionen zur Folge haben. Am Ende der unbenutzten Bereiche des Permanentspeichers 5 ist jeweils ein Sprungbefehl abgelegt, dessen Sprungadresse im jeweiligen unbenutzten Bereich des Permanentspeichers 5 liegt. Alternativ dazu kann die Sprungadresse des Sprungbefehls auf eine Routine weisen, die zu schützende Daten aus dem Speicher 4 löscht. Nach dem Löschen kann die Routine in einer Endlosschleife verharren. Durch diese Maßnahmen können Fehlfunktionen durch undefinierte Sprünge des Programmzählers, die von äußeren Störeinflüssen hervorgerufen werden können, vermieden werden. Undefinierte Sprünge des Programmzählers bergen beispielsweise das Risiko, dass eine Ausgabe des Inhalts des flüchtigen Speichers 7 zu einem Zeitpunkt veranlasst wird, zu dem dort geheime Daten abgelegt sind.

Der flüchtige Speicher 7 dient als Arbeitsspeicher für die Steuereinheit 2, so dass geheime Daten beispielsweise bei der Durchführung von Berechnungen im flüchtigen Speicher 7 zwischengespeichert werden. Im flüchtigen Speicher 7 bleibt der Speicherinhalt zwar nur solange erhalten, wie der tragbare Datenträger 1 mit einer Betriebspannung versorgt wird. Dennoch sollte die Verweildauer geheimer Daten im flüchtigen Speicher 7 möglichst kurz gehalten werden, indem diese Daten im flüchtigen Speicher 7 jeweils unmittelbar nach Gebrauch gelöscht werden. Dadurch kann das mit undefinierten Sprüngen verbundene Risiko noch weiter reduziert werden.

Der nichtflüchtige Speicher 6 kann während der Lebensdauer des tragbaren Datenträgers 1 immer wieder neu beschrieben werden. Der jeweilige Speicherinhalt bleibt auch dann erhalten, wenn der tragbare Datenträger 1 nicht mit der Betriebsspannung versorgt wird. Im nichtflüchtigen Speicher 6 sind beispielsweise Ergänzungen zum Betriebssystem, Anwendungssoftware, Schlüssel, personenbezogene Daten usw. abgelegt.

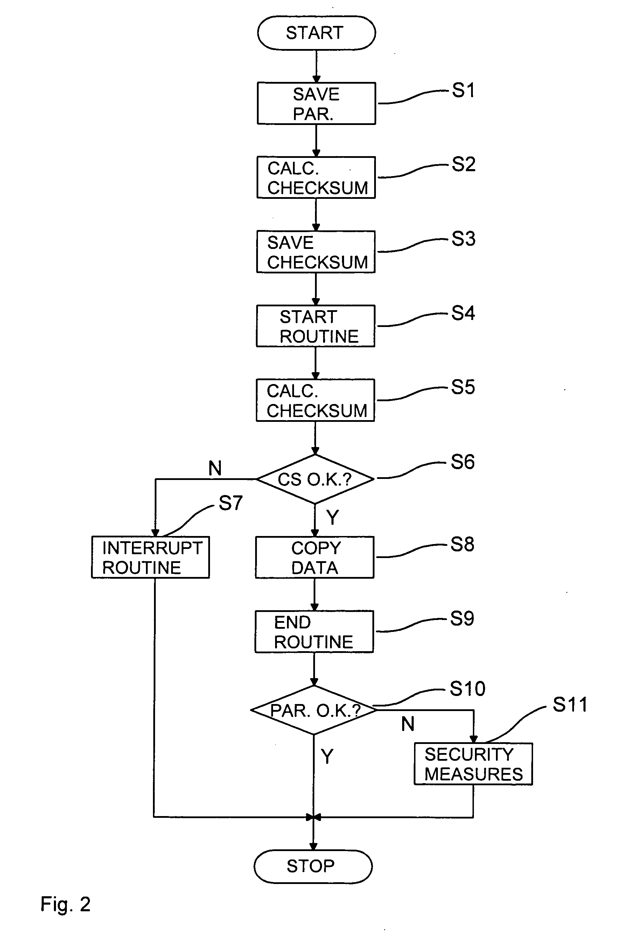

Fig. 2 zeigt ein Flussdiagramm für eine Variante eines erfindungsgemäßen Ablaufs eines Kopiervorgangs. Der Durchlauf des Flussdiagramms beginnt mit einem Schritt S1, in dem Parameter, die beim Kopiervorgang zur Anwendung kommen sollen, im flüchtigen Speicher 7 zwischengespeichert werden. Bei den Parametern handelt es sich um Angaben zur Quelle, zum Ziel und zum Umfang der zu kopierenden Daten. Der Parameter für die Quelle gibt an, von welcher Stelle beispielsweise des flüchtigen Speichers 7 Daten kopiert werden sollen. Die zu kopierende Datenmenge wird über den Parameter für den Umfang festgelegt. Über den Parameter für das Ziel wird bestimmt, wohin die Daten kopiert werden sollen. Ein Angreifer könnte versuchen, durch äußere Störeinflüsse, wie beispielsweise eine kurzzeitige Erhöhung oder Absenkung der Betriebsspannung des tragbaren Datenträgers 1, die Parameter des Kopiervorgangs zu manipulieren. Wird durch die Störeinflüsse beispielsweise der Parameter für das Ziel verändert, so könnte es vorkommen, dass geheime Daten in einen Bereich des flüchtigen Speicher 7 kopiert werden, der für die Ausgabe von Daten mittels der Ein-/ Ausgabeeinheit 3 vorgesehen ist. Dadurch können die geheimen Daten nach außen gelangen und möglicherweise missbräuchlich verwendet werden. Eine Veränderung des Parameters für den Umfang oder des Parameters für die Quelle kann ähnliche Folgen haben. Wie im Folgenden beschrieben wird, können Veränderungen der Parameter durch das erfindungsgemäße Verfahren aufgedeckt werden und dementsprechend der Kopiervorgang abgebrochen und/ oder andere Maßnahmen getroffen werden.

An Schritt S1 schließt sich ein Schritt S2 an, in dem eine Prüfsumme über die Parameter berechnet wird. Anhand der Prüfsumme kann zu einem späteren Zeitpunkt festgestellt werden, ob alle drei Parameter unverändert geblieben sind. Die Prüfsumme wir in einem auf Schritt S2 folgenden Schritt S3 im flüchtigen Speicher 7 des tragbaren Datenträgers 1 gespeichert. An Schritt S3 schließt sich ein Schritt S4 an, in dem eine Kopierroutine aufgerufen wird. Beim Aufruf der Kopierroutine werden die drei Parameter und zudem die für die Parameter berechnete Prüfsumme an die Kopierroutine übergeben. Auf Schritt S4 folgt ein Schritt S5, in dem im Rahmen der Kopierroutine aus den übergebenen Parametern nochmals die Prüfsumme ermittelt wird. Die so ermittelte Prüfsumme wird in einem sich anschließenden Schritt S6 mit der im Schritt S3 gespeicherten Prüfsumme verglichen. Besteht keine Übereinstimmung, so hat sich wenigstens einer der Parameter zwischen der ersten und der zweiten Ermittlung der Prüfsumme geändert. Es liegt somit ein Fehler vor, der bei einer Fortsetzung des Kopiervorgangs ein schwerwiegendes Sicherheitsrisiko zur Folge haben kann. Um dieses Risiko auszuschalten wird als nächstes ein Schritt S7 ausgeführt, in dem die Kopierroutine abgebrochen wird. Gegebenenfalls können weitere Sicherheitsmechanismen zum Schutz der geheimen Daten aktiviert werden.

Ergibt Schritt S6 dagegen eine Übereinstimmung der Prüfsummen, so wird von einem ordnungsgemäßen Ablauf ausgegangen und als nächstes ein Schritt S8 ausgeführt, in dem die Daten entsprechend den Parametern kopiert werden. An Schritt S8 schließt sich ein Schritt S9 an, in dem die Kopierroutine ordnungsgemäß beendet wird. Anschließend an Schritt S9 wird in Schritt S10 eine nochmalige Prüfung durchgeführt. Bei dem vorstehend beschriebenen Ablauf, bei dem bereits innerhalb der Kopierroutine eine Prüfung durchgeführt wurde, ist Schritt S10 nicht zwangsweise erforderlich und kann auch entfallen. Wird allerdings eine Kopierroutine eingesetzt, die nicht in der Lage ist, eine derartige Prüfung durchzuführen, so kann auf Schritt S10 nicht verzichtet werden. Die Prüfung des Schrittes S10 kann beispielsweise in einem Vergleich der in Schritt S1 abgespeicherten Parameter mit den in der Kopierroutine verwendeten Parametern bestehen. Bei einer vollständigen Übereinstimmung liegt ein ordnungsgemäßer Ablauf vor und der Durchlauf des Flussdiagramms ist beendet. Andernfalls ist ein Fehler aufgetreten und es besteht das Risiko, dass die kopierten Daten ausgespäht werden könnten. Um dies möglichst zu verhindern wird als nächstes ein Schritt S11 ausgeführt, in dem geeignete Gegenmaßnahmen getroffen werden. Mit Schritt S11 ist der Durchlauf des Flussdiagramms ebenfalls beendet.

In einer Abwandlung des Flussdiagramms besteht einer der bei Schritt S7 genannten weiteren Sicherheitsmechanismen darin, dass anschließend an Schritt S7 Schritt S11 ausgeführt wird. Außerdem kann das Flussdiagramm so abgewandelt werden, dass bei der Prüfung des Schrittes S10 anstelle der Parameter oder zusätzlich zu den Parametern die jeweils zugehörigen Prüfsummen miteinander verglichen werden.

Eine ähnliche Problematik wie beim Kopieren von Daten besteht auch bei der Ausgabe von Daten über die Ein-/Ausgabeeinheit 3. Auch in diesem Fall kann die Auswahl eines falschen oder zu großen Speicherbereichs fatale Folgen haben, so dass die vorstehend beschriebene Vorgehensweise analog anwendbar ist.

Im Folgenden wird eine weitere Maßnahme zur Abwehr von Angriffen beschrieben, die wahlweise einzeln oder in Kombination mit dem vorstehend Beschriebenen zur Anwendung kommen kann. Bei dieser Maßnahme wird ein Teilbereich des flüchtigen Speichers 7 für Daten reserviert, die für die Ausgabe über die Ein-/Ausgabeeinheit 3 vorgesehen sind. Zudem wird die Ein-/ Ausgabeeinheit 3 so betrieben, dass sie ausschließlich Daten aus dem reservierten Teilbereich des flüchtigen Speichers 7 ausgibt. Bei der Ausgabe von Daten wird fortwährend, z. B. bei jedem auszugebenden Byte, überprüft, ob die Daten tatsächlich aus dem reservierten Bereich stammen. Dadurch kann sichergestellt werden, dass auch bei einer Störung nur solche Daten ausgegeben werden, die auch für die Ausgabe vorgesehen sind. Die Reservierung muss nicht permanent aufrechterhalten werden, sondern kann auch jeweils temporär erfolgen. Allerdings ist dann sicherzustellen, dass jeweils definitiv nachvollziehbar ist, ob gerade eine Reservierung vorliegt. Dies kann mittels eines Flags erfolgen, das dem reservierten Teilbereich des flüchtigen Speichers 7 zugeordnet ist und angibt, ob gerade eine Reservierung vorliegt oder nicht. Zudem können flankierende Maßnahmen getroffen werden, die ein Ausgeben der Daten verhindern, wenn keine Reservierung vorliegt. Beispielsweise kann ein für die Ausgabe verwendetes Register auf einen nicht vorhandenen Speicherbereich gesetzt werden usw. Wird durch eine Manipulation eine Ausgabe gestartet, obwohl keine Reservierung vorliegt, so werden lediglich wertlose Daten ausgegeben oder es tritt ein Fehler auf.

Als eine weitere Maßnahme zur Erhöhung der Sicherheit des tragbaren Datenträgers 1 sind zur Abwehr von Timing Attacken alle Berechnungen, bei denen geheime Daten verwendet werden, so zu programmieren, dass die Berechnungszeit keine Informationen über die geheimen Daten liefert. Außerdem sind für die Berechnung z. B. von Prüfsummen keine Bit-orientierten Verfahren, sondern Verfahren auf Basis eines oder mehrerer Bytes, wie beispielsweise Reed-Solomon Codes oder Hamming Codes usw. zu verwenden.

## Patentansprüche

1. Verfahren zum sicheren Betrieb eines tragbaren Datenträgers (1), der einen Speicher (4) aufweist, **dadurch gekennzeichnet, dass** bei einer vom tragbaren Datenträger (1) ausgeführten Operation, bei der gemäß vorgegebenen Parametern auf den Speicher (4) des tragbaren Datenträgers (1) zugegriffen wird oder Daten über einen Ausgabekanal (3) des tragbaren Datenträgers (1) ausgegeben werden, wenigstens für einen der vorgegebenen Parameter geprüft wird, ob eine Änderung gegenüber einem vorherigen Wert des Parameters aufgetreten ist.

2. Verfahren nach Anspruch 1, **dadurch gekennzeichnet, dass** die Prüfung während und/oder nach Ausführung der Operation erfolgt.

3. Verfahren nach einem der vorhergehenden Ansprüche, **dadurch gekennzeichnet, dass** ein Prüfwert im tragbaren Datenträger (1) abgespeichert wird, mit dessen Hilfe für wenigstens einen Parameter ermittelt werden kann, ob eine Änderung aufgetreten ist.

4. Verfahren nach Anspruch 3, **dadurch gekennzeichnet, dass** der Prüfwert eine aus wenigstens einem Parameter ermittelte Prüfsumme darstellt.

5. Verfahren nach einem der Ansprüche 3 oder 4, **dadurch gekennzeichnet, dass** der Prüfwert beim Aufruf der Operation zusammen mit den vorgegebenen Parametern übergeben wird.

6. Verfahren nach einem der vorhergehenden Ansprüche, **dadurch gekennzeichnet, dass** die vorgegeben Parameter das Ziel und/ oder die Quelle und/oder den Umfang der mit der Operation verarbeiteten Daten angeben.

7. Verfahren nach einem der vorhergehenden Ansprüche, **dadurch gekennzeichnet, dass** es sich bei der Operation um eine Kopierroutine handelt.

8. Verfahren nach einem der Ansprüche 1 bis 6, **dadurch gekennzeichnet, dass** es sich bei der Operation um eine Ausgaberoutine handelt, von der ausschließlich Daten aus einem vorgegebenen Teilbereich des Speichers (4) ausgegeben werden.

9. Verfahren nach Anspruch 8, **dadurch gekennzeichnet, dass** der vorgegebene Teilbereich des Speichers (4) wenigstens temporär ausschließlich für Daten reserviert ist, die für Ausgabe vorgesehen sind.

10. Verfahren nach einem der Ansprüche 8 oder 9, **dadurch gekennzeichnet, dass** bei der Ausgabe von Daten jeweils geprüft wird, ob diese tatsächlich aus dem vorgegebenen Teilbereich des Speichers (4) stammen.

11. Verfahren nach einem der vorhergehenden Ansprüche, **dadurch gekennzeichnet, dass** der tragbare Datenträger (1) einen Arbeitsspeicher (7) zur temporären Zwischenspeicherung von Daten aufweist und alle geheimen Daten nach deren Gebrauch im Arbeitsspeicher (7) gelöscht werden.

12. Tragbarer Datenträger mit einem Speicher (4), **dadurch gekennzeichnet, dass** eine Sicherheitsfunktion vorgesehen ist, mit der Änderungen bei Parametern ermittelt werden, gemäß denen auf den Speicher (4) des tragbaren Datenträgers (1) zugegriffen wird oder Daten über einen Ausgabekanal (3) des tragbaren Datenträgers (1) ausgegeben werden.

13. Tragbarer Datenträger nach Anspruch 12, **dadurch gekennzeichnet, dass** ein Permanentspeicher (5) vorgesehen ist und alle unbenutzten Bereiche des Permanentspeichers (5) mit Befehlen aufgefüllt sind, bei deren Ausführung keine Aktionen durchgeführt werden, und am Ende der unbenutzten Bereiche jeweils ein Sprungbefehl gespeichert ist.

14. Tragbarer Datenträger nach Anspruch 13, **dadurch gekennzeichnet, dass** die Sprungadresse des Sprungbefehls innerhalb des jeweiligen unbenutzten Bereichs liegt.

15. Tragbarer Datenträger nach Anspruch 13, **dadurch gekennzeichnet, dass** die Sprungadresse des Sprungbefehls auf eine Routine weist, die zu schützende Daten aus dem Speicher (4) löscht.

16. Tragbarer Datenträger nach Anspruch 15, **dadurch gekennzeichnet, dass** die Routine nach dem Löschen in einer Endlosschleife verharrt.
